# EUROPEAN PATENT APPLICATION

(11) **EP 4 773 245 A1**
(43) Date of publication of application: **08.07.2026**
(21) Application number: 25861002.1
(22) Date of filing: 28.08.2025
(51) Int. Cl.: H01M 4/58, H01M 4/36, H01M 4/136, H01M 10/052, H01M 4/02

(54) **CATHODE MATERIAL POWDER, AND CATHODE AND LITHIUM SECONDARY BATTERY COMPRISING SAME**

(30) Priority: 28.08.2024 KR 20240116233
(71) Applicant: LG Energy Solution, Ltd., Seoul 07335 (KR)
(72) Inventor: PARK, Kang Joon, Daejeon 34122 (KR); KWON, Woo Jeong, Daejeon 34122 (KR); GWON, Hoe Yeong, Daejeon 34122 (KR); KIM, Su Bin, Daejeon 34122 (KR); PARK, Seung Young, Daejeon 34122 (KR); SHIM, Min Sub, Daejeon 34122 (KR); PARK, Sin Young, Daejeon 34122 (KR); LEE, Dong Hun, Daejeon 34122 (KR)
(74) Representative: Hoffmann Eitle
(86) International application number: PCT/KR2025/013223
(87) International publication number: WO 2026/049538

(57) **Abstract**

The present invention relates to a positive electrode material powder comprising: a first positive electrode active material comprising a first phosphate: and a second positive electrode active material comprising a second phosphate, wherein the first phosphate is represented by Formula 1, the second phosphate is represented by Formula 2, the first positive electrode active material is contained in a greater amount than the second positive electrode active material, and the second positive electrode active material has an average particle diameter D₅₀ of 1.0 µm or less.

## Description

### TECHNICAL FIELD

### Cross-reference to Related Applications

This application claims the benefit of Korean Patent Application No. 10-2024-0116233, filed on August 28, 2024, the contents of which are incorporated herein by reference.

### Technical Field

The present invention relates to a positive electrode material powder, and a positive electrode and a lithium secondary battery comprising the same.

### BACKGROUND ART

Lithium secondary batteries are generally manufactured by interposing a separator between a positive electrode containing a lithium-containing positive electrode active material and a negative electrode containing a negative electrode active material capable of storing lithium ions to form an electrode assembly, inserting the electrode assembly into a battery case, injecting a non-aqueous electrolyte, which serves as a lithium ion transport medium, and sealing.

The lithium secondary batteries are used not only in portable electronic devices such as mobile phones and laptops, but also in electric vehicles. Demand for the batteries has been rapidly increasing with the recent expansion of electric vehicles. In particular, lithium secondary batteries used in electric vehicles require high energy density and thermal stability.

Meanwhile, lithium cobalt-based oxide, lithium nickel-based oxide, lithium manganese-based oxide, lithium nickel cobalt manganese-based oxide, lithium manganese phosphate-based compounds, and lithium iron phosphate-based compounds are used as positive electrode active materials in lithium secondary batteries.

Among them, lithium iron phosphate-based compounds are widely used as positive electrode active materials for lithium secondary batteries due to the excellent thermal stability, excellent life characteristics, and safety, as well as low price, but have problems such as low operating voltage, relatively heavy compared to other compounds, low energy density, and difficulty in achieving excellent press density.

Therefore, there is a need to develop a positive electrode material powder that may realize the advantages of lithium iron phosphate compounds, such as excellent thermal stability, life characteristics, and safety, while also achieving excellent energy density and press density.

### DISCLOSURE OF THE INVENTION

### TECHNICAL PROBLEM

An object of the present invention is to solve the above-described problems and provide a positive electrode material powder including a first positive electrode active material with a low manganese (Mn) content and a second positive electrode active material with a high manganese (Mn) content, while the first positive electrode active material is included in excess of the second positive electrode active material, the average particle diameter (D₅₀) of the second positive electrode active material is controlled to 1.0 µm or less, thereby achieving excellent press density, high discharge capacity and high nominal voltage, resulting in superior energy density.

In addition, another object of the present invention is to solve the above-described problems and provide a positive electrode and a lithium secondary battery including the positive electrode material powder.

### TECHNICAL SOLUTION

[1] The present invention provides a positive electrode material powder comprising: a first positive electrode active material comprising a first phosphate: and a second positive electrode active material comprising a second phosphate, wherein the first phosphate is represented by Formula 1 below, the second phosphate is represented by Formula 2 below, the first positive electrode active material is contained in a greater amount than the second positive electrode active material, and the second positive electrode active material has an average particle diameter D₅₀ of 1.0 µm or less.

   [Formula 1] Li₁₊ₓ₁[Mn_{1-a1-b1}Feₐ₁M¹_{b1}]PO₄

   In Formula 1,
   M¹ comprises one or more selected from the group consisting of Al, Mg, Ni, Co, Ti, Ga, Cu, V, Nb, Zr, Ce, In, Zn and Y,
   -0.1≤x1≤0.1, 0.9≤a1≤1.0, and 0.0≤b1≤0.1,

      [Formula 2] Li₁₊ₓ₂[Mn_{1-a2-b2}Feₐ₂M²_{b2}]PO₄
   In Formula 2,
   M² comprises one or more selected from the group consisting of Al, Mg, Ni, Co, Ti, Ga, Cu, V, Nb, Zr, Ce, In, Zn and Y,
   -0.1≤x2≤0.1, 0.35≤a2≤0.45, and 0.0≤b2≤0.1.
[2] In [1] above of the present invention, the first phosphate may be LiFePO₄.
[3] In [1] or [2] above of the present invention, the second phosphate may be represented by Formula 2-1 below.

   [Formula 2-1] Li₁₊ₓ₂[Mn_{1-a2-b2}Feₐ₂M²_{b2}]PO₄

   In Formula 2,
   M² comprises one or more selected from the group consisting of Al, Mg, Ni, Co, Ti, Ga, Cu, V, Nb, Zr, Ce, In, Zn and Y,
   -0.1≤x2≤0.1, 0.35≤a2≤0.45, and 0.0≤b2≤0.1.
[4] In at least one among [1] to [3] above of the present invention, an average particle diameter D₅₀ of the first positive electrode active material may be 0.5 µm to 10 µm.
[5] In at least one among [1] to [4] above of the present invention, the average particle diameter D₅₀ of the second positive electrode active material may be 0.3 µm to 0.8 µm.
[6] In at least one among [1] to [5] above of the present invention, the first and second positive electrode active materials may independently and respectively further comprise a coating layer comprising carbon disposed on the first and second phosphates.
[7] In at least one among [1] to [6] above of the present invention, the content of carbon comprised in the coating layer comprising carbon disposed on the first phosphate may be 0.1 wt% to 5.0 wt% based on the total weight of the first positive electrode active material.
[8] In at least one among [1] to [7] above of the present invention, the content of carbon comprised in the coating layer comprising carbon disposed on the second phosphate may be 0.5 wt% to 5.0 wt% based on the total weight of the second positive electrode active material.
[9] In at least one among [1] to [8] above of the present invention, a weight ratio of the first positive electrode active material and the second positive electrode active material may be 60:40 to 90:10.
[10] In at least one among [1] to [9] above of the present invention, the average particle diameter D₅₀ of the first positive electrode active material may be greater than the average particle diameter D₅₀ of the second positive electrode active material.
[11] In at least one among [1] to [10] above of the present invention, the molar ratio of Fe to Mn (Fe/Mn) in the positive electrode material powder may be 2.5 to 50.
[12] In at least one among [1] to [11] above of the present invention, the positive electrode material powder may have a press density of 2.50 g/cc or more, as measured after pressing at a pressure of 3 tons.
[13] The present invention provides a positive electrode comprising the positive electrode material powder according to at least one among [1] to [12] above.
[14] The present invention provides a lithium secondary battery comprising: the positive electrode according to [13] above; a negative electrode oppositely disposed to the positive electrode; and an electrolyte.

### ADVANTAGEOUS EFFECTS

The positive electrode material powder according to the present invention includes a first positive electrode active material including a phosphate represented by Formula 1 and a second positive electrode active material including a phosphate represented by Formula 2, and is characterized in that the first and second positive electrode active materials are included in a specific weight ratio, and the average particle diameter D₅₀ of the second positive electrode active material is 1.0 µm or less. The phosphate represented by Formula 1 has high electronic conductivity, lithium ion conductivity, and discharge capacity, and the phosphate represented by Formula 2 has high operating voltage. In this case, by including the first positive electrode active material including the phosphate represented by Formula 1 in a larger amount than the second positive electrode active material, the press density, discharge capacity, and nominal voltage may be increased, while controlling the average particle diameter D₅₀ of the second positive electrode active material to further increase the press density. Therefore, when the positive electrode material powder according to the present invention is applied, the energy density of a lithium secondary battery may be improved.

### MODE FOR CARRYING OUT THE INVENTION

Hereinafter, the present invention will be explained in particular.

Words or terms used in this specification and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

The terminology used herein is for the purpose of describing exemplary embodiments only and is not intended to limit the present invention. Singular expressions include plural expressions unless the context clearly indicates otherwise.

In the present invention, terms such as "comprise," "include," or "have" are intended to indicate the presence of implemented features, numbers, steps, components, or combinations thereof, but should be understood not to preclude the possibility of the presence or addition of one or more other features, numbers, steps, components, or combinations thereof.

In the present invention, "single particle-type" refers to a particle formed by an aggregation of 50 or less sub-particles. The sub-particle unit constituting a single particle-type particle is referred to as a nodule. Single particle-type particles include single particles composed of one nodule and pseudo-single particles which are composites of 2 to 50 nodules.

The "nodule" refers to a sub-particle unit constituting a single particle or pseudo-single particle and may be a single crystal without a crystalline grain boundary, or a polycrystal that visually exhibits no grain boundaries when observed using a scanning electron microscope at a magnification of 2,000x to 20,000x.

In the present invention, "secondary particle" refers to a particle formed by an aggregation of more than 50 sub-particles. To distinguish from the sub-particles that constitute single particles, the sub-particles that constitute secondary particles are referred to as "primary particles."

In the present invention, the term "particle" encompasses any one or all of a single particle, a pseudo-single particle, a primary particle, a nodule, and a secondary particle.

In the present invention, the "BET specific surface area" is measured by a BET method, and specifically, may be calculated from the nitrogen gas adsorption amount at liquid nitrogen temperature (77K) using BELSORP-mino II of BEL Japan.

In the present invention, the "average particle diameter D₅₀" refers to the particle size corresponding to 50% of the volume-cumulative particle size distribution of the particles. The average particle diameter D₅₀ may be measured using a laser diffraction method. The laser diffraction method may generally measure particle diameters from the submicron range to several millimeters, and may obtain results with high reproducibility and high resolution.

The inventors of the present invention have conducted repeated research to improve the energy density of a lithium secondary battery and have found that the energy density (Wh/L) of a lithium secondary battery may be improved when a positive electrode material powder containing a first positive electrode active material including a phosphate having a high iron (Fe) content is used in a greater amount than a second positive electrode active material including a phosphate having a relatively high manganese (Mn) content, but the average particle diameter D₅₀ of the second positive electrode active material is controlled to 1.0 µm or less, thereby completing the present invention.

Hereinafter, the present invention will be described in detail.

The positive electrode material powder according to the present invention, and the positive electrode and the lithium secondary battery including the same, include at least one of the disclosed configurations below, and may include any combination of technically feasible configurations among the configurations below.

### Positive Electrode Material Powder

Hereinafter, a positive electrode material powder according to the present invention will be explained.

The positive electrode material powder according to the present invention is a positive electrode material powder including a first positive electrode active material including a first phosphate; and a second positive electrode active material including a second phosphate, wherein the first phosphate is represented by Formula 1 below, the second phosphate is represented by Formula 2 below, the first positive electrode active material is included in a greater amount than the second positive electrode active material, and the second positive electrode active material has an average particle diameter D₅₀ of 1.0 µm or less.

[Formula 1] Li₁₊ₓ₁[Mn_{1-a1-b1}Feₐ₁M¹_{b1}]PO₄

In Formula 1,
M¹ comprises one or more selected from the group consisting of Al, Mg, Ni, Co, Ti, Ga, Cu, V, Nb, Zr, Ce, In, Zn and Y,
-0.1≤x1≤0.1, 0.9≤a1≤1.0, and 0.0≤b1≤0.1.

[Formula 2] Li₁₊ₓ₂[Mn_{1-a2-b2}Feₐ₂M²_{b2}]PO₄

In Formula 2,
M² comprises one or more selected from the group consisting of Al, Mg, Ni, Co, Ti, Ga, Cu, V, Nb, Zr, Ce, In, Zn and Y,
-0.1≤x2≤0.1, 0.35≤a2≤0.45, and 0.0≤b2≤0.1.

Lithium manganese phosphate and lithium iron phosphate compounds with an olivine structure exhibit one-dimensional lithium ion diffusion paths within crystal structures, resulting in low lithium ion conductivity during charge and discharge. Therefore, the control of the average particle diameter of the compound to within tens to hundreds of nanometers is essential for high-power charging and discharging. However, if the average particle diameter of the compound is excessively small, the increase of the solid content in a slurry is limited, high-density electrode is difficult to obtain due to the disadvantage of rolling, resulting in a problem of low energy density.

In particular, lithium iron phosphate compounds exhibit higher electronic conductivity and lithium ion conductivity than lithium manganese phosphate compounds, resulting in excellent charging output. Therefore, even if the average particle diameter is relatively increased, the impact on battery performance is small, making it possible to achieve high-density electrodes. However, there is a problem that the operating voltage is low, resulting in low energy density.

In contrast, lithium manganese phosphate compounds exhibit a high operating voltage and thus a high energy density, but poor charge-output characteristics, and the ability to increase the average particle diameter of the compounds is limited, making high-density electrodes difficult to achieve.

To solve the problem, the use of lithium manganese iron phosphate compounds with a controlled molar ratio of iron and manganese in lithium phosphate (e.g., LiMnₓFe₍₁₋ₓ₎PO₄) as positive electrode active materials has been proposed. However, the trade-off relation between the advantages and disadvantages of the aforementioned lithium iron phosphate compounds and lithium manganese phosphate compounds remains.

Therefore, in order to solve the above-mentioned problem, in the present invention, a positive electrode material powder including a first positive electrode active material including a phosphate having a high iron content (low manganese content) and a second positive electrode active material including a phosphate having a relatively high manganese content (low iron content), wherein the first positive electrode active material is contained in a greater amount than the second positive electrode active material, and the second positive electrode active material has an average particle diameter D₅₀ of 1.0 µm or less, is intended to be applied to a lithium secondary battery.

In this case, if the first positive electrode active material having a high iron content (low manganese content), even if the average particle diameter is increased, the charge output is excellent, and the discharge capacity (mAh/g) is excellent, and in the case of the second positive electrode active material having a high manganese content (low iron content), the operating voltage is excellent even if the average particle diameter is small. That is, when the first positive electrode active material, which has the above characteristics, is included in the positive electrode material powder in greater quantity than the second positive electrode active material, the energy density (Wh/L), which is the product of the press density (g/cc), discharge capacity (mAh/g), and nominal voltage (V), is maximized, enabling the production of a positive electrode material powder capable of achieving excellent energy density.

In contrast, when the second positive electrode active material is included in the positive electrode material powder in an equivalent weight to the first positive electrode active material, or in greater quantity than the first positive electrode active material, the excess of the second positive electrode active material results in a somewhat higher nominal voltage. However, the second positive electrode active material may not be properly mixed with the first positive electrode active material, resulting in a low press density and a small discharge capacity, ultimately reducing the energy density.

In addition, when the positive electrode material powder contains the first positive electrode active material alone, the discharge capacity is somewhat higher, but the second positive electrode active material is not contained, resulting in lower press density and nominal voltage, ultimately reducing the energy density. In contrast, when the second positive electrode active material is solely included in the positive electrode material powder, the nominal voltage is somewhat higher, but the first positive electrode active material is not contained, resulting in lower press density and discharge capacity, ultimately reducing the energy density.

Meanwhile, if the positive electrode material powder contains more of the first positive electrode active material than the second positive electrode active material, and the average particle diameter D₅₀ of the second positive electrode active material is greater than 1.0 µm, it is difficult to improve the energy density. Specifically, when the average particle diameter D₅₀ of the second positive electrode active material is greater than 1.0 µm, the void space between the positive electrode material powder particles becomes relatively large, which may reduce the press density of the positive electrode material powder. Furthermore, the excessively large particle diameter limits rearrangement between particles within the positive electrode material powder, making it difficult to form a sufficiently dense structure during electrode rolling, resulting in a problem of reducing energy density of a battery.

Therefore, by including the first positive electrode active material including a phosphate with high iron content (low manganese content) and the second positive electrode active material including a phosphate with a relatively high manganese content (low iron content), wherein the first positive electrode active material is contained in greater quantity than the second positive electrode active material, while the average particle diameter D₅₀ of the second positive electrode active material is controlled to 1.0 µm or less, both excellent press density and superior energy density may be achieved.

Hereinafter, the positive electrode material powder according to the present invention will be described in more detail.

### (1) First Positive Electrode Active Material.

In the positive electrode material powder according to the present invention, the positive electrode material powder includes a first positive electrode active material including a first phosphate, and the first phosphate is represented by Formula 1 below.

[Formula 1] Li₁₊ₓ₁[Mn_{1-a1-b1}Feₐ₁M¹_{b1}]PO₄

In Formula 1, M¹ includes one or more selected from the group consisting of Al, Mg, Ni, Co, Ti, Ga, Cu, V, Nb, Zr, Ce, In, Zn and Y, preferably, one or more selected from the group consisting of Mg, Ti, V and Nb, more preferably, one or more selected from the group consisting of Ti and V. When the conditions are satisfied, effects such as suppression of structural changes during repeated charge and discharge of the positive electrode active material may be achieved.

x1 is -0.1 to 0.1. When the range is satisfied, high-capacity characteristics and high energy density per unit volume may be achieved.

a1 is the mole fraction of iron (Fe) among the total metals excluding lithium in the first phosphate, and is 0.9 to 1.0, preferably, 0.9 or more, 0.92 or more, 0.95 or more, 0.97 or more, or 0.99 or more, and 1.0 or less, and more preferably, a1 may be 1.0.

When a1 is less than 0.9, the electronic conductivity and lithium ion conductivity in the phosphate may be low, resulting in poor output characteristics, and there is a problem in that there is a limit to increase an average particle diameter. Therefore, when the range is satisfied, it may be preferable in that a high-density electrode may be achieved by appropriately increasing an average particle diameter while achieving excellent output characteristics.

b1 is the mole fraction of M¹ among the total metal excluding lithium in the first phosphate and may be 0.0 to 0.1, preferably, 0.001 or more, 0.002 or more, 0.003 or more, 0.004 or more, 0.005 or more, 0.006 or more, 0.007 or more, 0.008 or more, or 0.009 or more, and 0.1 or less, 0.09 or less, 0.08 or less, 0.07 or less, 0.06 or less, 0.05 or less, 0.04 or less, 0.03 or less, 0.02 or less, or 0.01 or less. When the range is satisfied, ionic conductivity and electrical conductivity may be improved.

Preferably, the first phosphate may be LiFePO₄.

According to an embodiment of the present invention, the first positive electrode active material may have an average particle diameter D₅₀ of 0.5 µm to 10 µm, preferably 0.6 µm to 7 µm, more preferably 0.7 µm to 5 µm. When the range is satisfied, the first positive electrode active material may be appropriately distributed within the positive electrode material powder, and a high-density electrode may be obtained. In addition, the slurry solid content may be easily increased during electrode fabrication, excellent energy density and processability may be achieved, and it is preferable in achieving excellent discharge capacity.

According to an embodiment of the present invention, the first positive electrode active material may have a BET specific surface area of 1 m²/g to 30 m²/g, preferably 3 m²/g to 20 m²/g, more preferably 5 m²/g to 15 m²/g. When the range is satisfied, it is easy to increase the slurry solid content during electrode manufacturing, and it is preferable in terms of excellent electrolyte impregnation properties.

According to an embodiment of the present invention, the first positive electrode active material may be in a single particle-form. Preferably, the first positive electrode active material may be in a single particle-form containing 1 to 50 nodules, more preferably 1 to 40 nodules, even more preferably 1 to 30 nodules, even more preferably 1 to 25 nodules, and even more preferably 1 to 15 nodules. When the conditions are satisfied, the contact area with an electrolyte is small, which reduces side reactions with the electrolyte. The particles have fewer pores, which enables excellent energy density, stable particle structure, and improved durability.

According to an embodiment of the present invention, the first positive electrode active material may further include a carbon-containing coating layer disposed on the first phosphate. When the conditions are satisfied, the electronic conductivity of the positive electrode material powder may be improved.

According to an embodiment of the present invention, the carbon content in the carbon-containing coating layer disposed on the first phosphate may range from 0.1 wt% to 5.0 wt%, preferably from 0.25 wt% to 4.0 wt%, and more preferably from 0.5 wt% to 3.0 wt%, based on the total weight of the first positive electrode active material. When the range is satisfied, it may be preferable in that the electronic conductivity of the first positive electrode active material may be improved while not acting as a resistor.

### (2) Second Positive Electrode Active Material.

In the positive electrode material powder according to the present invention, the positive electrode material powder includes a second positive electrode active material including a second phosphate, and the second phosphate is represented by Formula 2 below.

[Formula 2] Li₁₊ₓ₂[Mn_{1-a2-b2}Feₐ₂M²_{b2}]PO₄

In Formula 2, M² includes one or more selected from the group consisting of Al, Mg, Ni, Co, Ti, Ga, Cu, V, Nb, Zr, Ce, In, Zn and Y, preferably, one or more selected from the group consisting of Mg, Ti, V and Nb, more preferably, one or more selected from the group consisting of Ti and V. When the conditions are satisfied, effects such as suppression of structural changes during repeated charge and discharge of the positive electrode active material may be achieved.

x2 is -0.1 to 0.1. When the range is satisfied, high-capacity characteristics and high energy density per unit volume may be achieved.

a2 is the mole fraction of iron (Fe) among the total metals excluding lithium in the second phosphate, and is 0.2 to 0.5, preferably 0.2 or more, 0.25 or more, 0.30 or more, or 0.35 or more, and may be 0.5 or less, 0.47 or less, or 0.45 or less, and more preferably, a2 may be 0.35 to 0.45.

When a2 is less than 0.2, the electronic conductivity and lithium ion conductivity in the phosphate may be low, resulting in poor output characteristics, low discharge capacity, and limitations in increasing the average particle diameter. When a2 exceeds 0.5, the operating voltage may be low, and energy density may be reduced. Therefore, when the range is satisfied, it is preferable in enabling a high-density electrode by appropriately increasing the average particle diameter while maintaining excellent output characteristics.

b2 represents the mole fraction of M² among total metals excluding lithium in the first phosphate, and may range from 0.0 to 0.1, preferably, 0.001 or more, 0.002 or more, 0.003 or more, 0.004 or more, 0.005 or more, 0.006 or more, 0.007 or more, 0.008 or more, or 0.009 or more, and may be 0.1 or less, 0.09 or less, 0.08 or less, 0.07 or less, 0.06 or less, 0.05 or less, 0.04 or less, 0.03 or less, 0.02 or less, or 0.01 or less. When the range is satisfied, ionic conductivity and electrical conductivity may be improved.

Preferably, the second phosphate may be represented by Formula 2-1 below.

[Formula 2-1] Li₁₊ₓ₂[Mn_{1-a2-b2}Feₐ₂M²_{b2}]PO₄

In Formula 2, M² includes one or more elements selected from the group consisting of Al, Mg, Ni, Co, Ti, Ga, Cu, V, Nb, Zr, Ce, In, Zn, and Y, -0.1≤x2≤0.1, 0.35≤a2≤0.45, and 0.0 ≤b2≤0.1.

According to an embodiment of the present invention, the second positive electrode active material has an average particle diameter D₅₀ of 1.0 µm or less. Preferably, the average particle diameter may be 0.1 µm or more, 0.15 µm or more, 0.20 µm or more, 0.25 µm or more, or 0.30 µm or more, and 1.0 µm or less, 0.95 µm or less, 0.90 µm or less, 0.85 µm or less, or 0.80 µm or less, and more preferably, 0.3 µm to 0.8 µm. When the range is satisfied, the second positive electrode active material may be appropriately distributed within the positive electrode material powder, enabling a high-density electrode. Furthermore, the slurry solid content may be easily increased during electrode fabrication, excellent energy density and processability may be achieved, and it is preferable in achieving excellent discharge capacity.

According to an embodiment of the present invention, the second positive electrode active material may have a BET specific surface area of 1 m²/g to 30 m²/g, preferably 2 m²/g to 25 m²/g, and more preferably 5 m²/g to 20 m²/g. When the range is satisfied, the slurry solid content may be easily increased during electrode fabrication, and it is preferable in achieving excellent electrolyte impregnation properties.

According to an embodiment of the present invention, the second positive electrode active material may be in a single particle-form. Preferably, the second positive electrode active material may be a single particle-form containing 1 to 50 nodules, more preferably 1 to 40 nodules, even more preferably 1 to 30 nodules, even more preferably 1 to 25 nodules, and even more preferably 1 to 15 nodules. When the conditions are satisfied, the contact area with an electrolyte is small, and side reactions with the electrolyte may be reduced, pores within the particles are small, so excellent energy density may be achieved, and the particle structure may be stable, and durability may be improved.

According to an embodiment of the present invention, the second positive electrode active material may further include a coating layer including carbon disposed on the second phosphate. When the conditions are satisfied, the electronic conductivity of the positive electrode material powder may be improved.

According to an embodiment of the present invention, the carbon content in the carbon-containing coating layer disposed on the second phosphate may range from 0.5 wt% to 5.0 wt%, preferably from 0.8 wt% to 4.0 wt%, and more preferably from 1.0 wt% to 3.0 wt%, based on the total weight of the first positive electrode active material. When the range is satisfied, it is preferably in improving the electronic conductivity of the first positive electrode active material while not acting as a resistor.

According to an embodiment of the present invention, the first and second positive electrode active materials may further include a carbon-containing coating layer disposed independently on the first and second phosphates, respectively.

The positive electrode material powder according to the present invention includes a greater amount of the first positive electrode active material than the second positive electrode active material. Preferably, the weight ratio of the first positive electrode active material to the second positive electrode active material may range from 55:45 to 95:5, and more preferably from 60:40 to 90:10. When the range is satisfied, the first positive electrode active material and the second positive electrode active material are appropriately mixed so that the press density is high, and the discharge capacity and nominal voltage are high, resulting in excellent energy density.

According to an embodiment of the present invention, the average particle diameter D₅₀ of the first positive electrode active material may be greater than the average particle diameter D₅₀ of the second positive electrode active material. When the condition is satisfied, unlike the second positive electrode active material having a large average particle diameter, which exhibits reduced electronic conductivity and lithium ion conductivity, the electronic conductivity and lithium ion conductivity of the first positive electrode active material are not reduced, while the second positive electrode active material having a smaller average particle diameter may appropriately fill the pores between the first positive electrode active material having a larger average particle diameter. Accordingly, excellent press density and superior energy density characteristics may be achieved.

According to an embodiment of the present invention, the molar ratio of Fe to Mn (Fe/Mn) in the positive electrode material powder may be 2.5 to 50, preferably 3.5 to 20, and more preferably 4.5 to 10. The molar ratio of Fe to Mn (Fe/Mn) in the positive electrode material powder may differ from the composition of the phosphates present in the first positive electrode active material and/or the second positive electrode active material, respectively. When the range is satisfied, excellent energy density may be achieved.

According to an embodiment of the present invention, the positive electrode material powder may have a press density of 2.50 g/cc or more, preferably 2.50 g/cc to 3.00 g/cc, more preferably 2.52 g/cc to 2.90 g/cc, and even more preferably 2.54 g/cc to 2.80 g/cc, as measured after pressing at a pressure of 3 tons. For example, the press density may be measured by taking 1 g of the positive electrode material powder, and then placing same into a cylindrical metal mold with a diameter of 1.3 cm and pressing under a load of 3 tons. When the range is satisfied, a high-density electrode may be easily manufactured, achieving excellent energy density.

### Positive Electrode

Hereinafter, the positive electrode according to the present invention will be explained.

The positive electrode according to the present invention includes the positive electrode material powder described above. Preferably, the positive electrode may include a positive electrode active material layer including the positive electrode material powder described above, more preferably, a positive electrode current collector; and a positive electrode active material layer positioned on the positive electrode current collector and including the positive electrode active material described above.

Hereinafter, each configuration of the positive electrode according to the present invention will be described in detail.

### (1) Positive Electrode Current Collector

The positive electrode current collector may use any of various positive electrode current collectors used in the art. For example, the positive electrode current collector may use stainless steel, aluminum, nickel, titanium, calcined carbon, or aluminum or stainless steel, surface-treated with carbon, nickel, titanium, silver, or the like. The positive electrode current collector typically has a thickness of 3 to 500 µm, and fine irregularities may be formed on the surface of the positive electrode current collector to enhance the adhesion of the positive electrode active material. The positive electrode current collector may be used in various forms, such as a film, sheet, foil, net, porous body, foam, or non-woven fabric.

### (2) Positive Electrode Active Material Layer

The positive electrode active material layer may be positioned on the positive electrode current collector, preferably on one or both sides of the positive electrode current collector. The positive electrode active material layer may have a single layer or a multilayer structure of two or more layers.

The positive electrode active material layer may include a positive electrode material powder according to the present invention, a positive electrode conductive material, and a positive electrode binder.

The positive electrode active material may be included in an amount of 90 wt% to 99 wt%, preferably 92 wt% to 98 wt%, and more preferably 94 wt% to 98 wt%, based on the total weight of the positive electrode active material layer. When the range is satisfied, the energy density and capacity characteristics of a lithium secondary battery to which the positive electrode is applied may be improved.

The positive electrode conductive material is used to impart conductivity to the electrode. Any material that does not cause chemical changes in the battery and exhibits electronic conductivity may be used without particular limitations. Specific examples include: graphite such as natural graphite or artificial graphite; carbon-based materials such as carbon black, acetylene black, Ketjen black, channel black, furnace black, lamp black, thermal black, carbon fiber, and carbon nanotubes; metal powders or metal fibers of copper, nickel, aluminum, and silver; conductive whiskers of zinc oxide and potassium titanate; conductive metal oxides such as titanium oxide; or conductive polymers such as polyphenylene derivatives. One thereof alone or a mixture of two or more thereof may be used. The positive electrode conductive material may typically be included in an amount of 0.1 to 10 wt%, preferably 0.1 to 8 wt%, and more preferably 0.1 to 5 wt%, based on the total weight of the positive electrode active material layer.

The positive electrode binder enhances the adhesion between positive electrode particles and the adhesion between the positive electrode and the positive electrode current collector. Specific examples include: fluorine resin-based binders including polyvinylidene fluoride (PVDF) or polytetrafluoroethylene (PTFE); rubber-based binders including styrene butadiene rubber (SBR), acrylonitrile-butadiene rubber, and styrene-isoprene rubber; cellulose-based binders including carboxymethyl cellulose (CMC), starch, hydroxypropyl cellulose, and regenerated cellulose; polyalcohol-based binders including polyvinyl alcohol; polyolefin-based binders including as polyethylene and polypropylene; polyimide-based binders; polyester-based binders; and silane-based binders. One thereof alone or a mixture of two or more thereof may be used. The positive electrode binder may be included in an amount of 1 to 10 wt%, preferably 0.5 to 10 wt%, and more preferably 1 to 8 wt%, based on the total weight of the positive electrode active material layer.

The positive electrode may be manufactured using a method known in the art. For example, the positive electrode may be manufactured by mixing a positive electrode material powder, a positive electrode binder, and a positive electrode conductive agent in a solvent to prepare a positive electrode slurry, applying the positive electrode slurry on a positive electrode current collector, and then drying and rolling same, or by casting the positive electrode slurry on a separate support, and then peeling a film obtained by peeling from the support and laminating the film on a positive electrode current collector. In this case, as the solvent of the positive electrode slurry, positive electrode slurry solvents generally used in the relevant technical field may be used, and examples thereof include, but are not limited to, dimethyl sulfoxide (DMSO), isopropyl alcohol, N-methylpyrrolidone (NMP), acetone, water, or mixtures thereof. The solvent may be used in an amount that dissolves or disperses the positive electrode active material, the positive electrode conductive agent, and the positive electrode binder, and has a viscosity that allows the negative electrode slurry to be uniformly coated.

### Lithium Secondary Battery

Hereinafter, a lithium secondary battery according to the present invention will be described.

The lithium secondary battery according to the present invention includes: a positive electrode according to the present invention; a negative electrode positioned opposite the positive electrode; and an electrolyte. Optionally, the lithium secondary battery according to the present invention may further include a separator interposed between the positive electrode and the negative electrode.

Since the positive electrode is the same as described above, the remaining components excluding the positive electrode will be described below.

### (1) Negative Electrode

In the lithium secondary battery according to the present invention, the negative electrode includes a negative electrode active material layer including a negative electrode active material. Specifically, the negative electrode current collector may include a negative electrode active material layer positioned on at least one side of the negative electrode current collector.

The negative electrode current collector is not particularly limited as long as it has high conductivity and does not induce chemical changes in the battery. For example, copper, stainless steel, aluminum, nickel, titanium, calcined carbon, copper or stainless steel, surface-treated with carbon, nickel, titanium, silver, or the like, and an aluminum-cadmium alloy, may be used. In addition, the negative electrode current collector typically has a thickness of 3 to 500 µm. Like the positive electrode current collector, the negative electrode current collector may be formed with fine irregularities on the surface to enhance the bonding strength of the negative electrode active material. For example, the negative electrode current collector may be used in various forms such as a film, sheet, foil, net, porous material, foam, and non-woven fabric.

The negative electrode active material layer may be positioned on the negative electrode current collector, specifically on one or both sides of the negative electrode current collector. The negative electrode active material layer may have a single-layer structure or a multilayer structure including two or more layers.

If the negative electrode active material layer has a multilayer structure of two or more, each layer may have different types and/or contents of the negative electrode active material, negative electrode binder, and/or negative electrode conductive agent. By forming the negative electrode active material layer in the multilayer structure and varying the composition of each layer, battery performance characteristics such as rapid charging performance and output characteristics, may be appropriately controlled.

Meanwhile, the negative active material may use a compound capable of reversible lithium intercalation and deintercalation. Specific examples include: carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloys, Sn alloys, or Al alloys; metal oxides capable of doping and dedoping lithium, such as SiO_{β} (0<β<2), SnO₂, vanadium oxide, and lithium vanadium oxide; or composites including the metallic compounds and carbonaceous materials, such as Si-C composites or Sn-C composites. One thereof or a mixture of two or more thereof may be used.

Meanwhile, the carbonaceous material may include both low-crystalline carbon and high-crystalline carbon. Representative examples of low-crystalline carbon include soft carbon and hard carbon. High-crystalline carbon includes amorphous, plate-like, flaky, spherical, or fibrous natural or artificial graphite, kish graphite, pyrolytic carbon, mesophase pitch-based carbon fiber, meso-carbon microspheres, mesophase pitches, and high-temperature calcined carbons such as petroleum or coal tar pitch-derived cokes.

Preferably, the negative electrode active material may be a carbon-based negative electrode active material. In this case, the carbon-based negative electrode active material may include, for example, natural graphite, artificial graphite, graphitized carbon fiber, amorphous carbon, soft carbon, hard carbon, or a combination thereof. More preferably, the carbon-based negative electrode active material may include natural graphite and artificial graphite.

The carbon-based negative electrode active material may have an average particle diameter D₅₀ of 0.1 µm to 30 µm, preferably 0.5 µm to 30 µm.

The negative electrode active material may be included in an amount of 80 wt% to 98 wt%, preferably 90 wt% to 98 wt%, and more preferably 93 wt% to 98 wt%, based on the total weight of the negative electrode active material layer. When the content of the negative electrode active material satisfies the range, excellent energy density may be achieved.

Meanwhile, the negative electrode active material layer may further include a negative electrode conductive agent and/or a negative electrode binder along with the negative electrode active material.

The negative electrode conductive agent is used to impart conductivity to the negative electrode. In the battery, any material that does not cause chemical changes and has electronic conductivity may be used without particular limitations. Specific examples include: carbon-based materials such as carbon black, acetylene black, Ketjen black, channel black, furnace black, lamp black, thermal black, carbon fiber, and carbon nanotubes; metal powders or metal fibers of copper, nickel, aluminum, and silver; conductive whiskers of zinc oxide and potassium titanate; conductive metal oxides such as titanium oxide; or conductive polymers such as polyphenylene derivatives. One thereof alone or a mixture of two or more thereof may be used.

The negative electrode conductive agent may typically be included in an amount of 0.1 to 10 wt%, preferably 0.1 to 8 wt%, and more preferably 0.1 to 5 wt%, based on the total weight of the negative electrode active material layer.

The negative electrode binder serves to enhance adhesion between the negative electrode active material particles and the adhesion between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or various copolymers thereof. One thereof alone or in a mixture of two or more thereof may be used.

The negative electrode binder may be included in an amount of 0.1 to 10 wt%, preferably 0.5 to 10 wt%, and more preferably 1 to 8 wt%, based on the total weight of the negative electrode active material layer.

The negative electrode may be manufactured by any method known in the art. For example, the negative electrode may be manufactured by mixing a negative electrode active material, a negative electrode binder, and/or a negative electrode conductive agent in a solvent to prepare a negative electrode slurry, applying the negative electrode slurry onto a negative electrode current collector, followed by drying and rolling. Alternatively, the negative electrode slurry may be manufactured by casting the negative electrode slurry onto a separate support, laminating a film obtained by peeling from the support onto a negative electrode current collector.

Meanwhile, the solvent for the negative electrode slurry may be any solvent commonly used in the art. Examples include, but are not limited to, dimethyl sulfoxide (DMSO), isopropyl alcohol, N-methylpyrrolidone (NMP), acetone, water, or mixtures thereof. The solvent may be used in an amount that dissolves or disperses the negative electrode active material, the negative electrode conductive agent, and the negative electrode binder, and has a viscosity that allows the negative electrode slurry to be uniformly coated.

### (2) Electrolyte

The electrolyte according to the present invention may include a lithium salt and an organic solvent.

The lithium salt may be any compound capable of providing lithium ions used in a lithium secondary battery, without particular limitation. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is 0.1 to 5.0 M, preferably in a range of 0.1 to 3.0 M. When the concentration of the lithium salt is within the range, the electrolyte exhibits suitable conductivity and viscosity, resulting in excellent electrolyte performance and efficient lithium ion mobility.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is an organic solvent with a high viscosity and may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent is an organic solvent with low viscosity and low dielectric constant. Representative examples thereof include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC).

Specific examples of the linear ester-based organic solvent include at least one organic solvent selected from the group consisting of methyl acetate, ethyl acetate, propyl acetate, methyl propionate, ethyl propionate, propyl propionate, and butyl propionate.

The cyclic ester-based organic solvent includes at least one organic solvent selected from the group consisting of butyrolactone, valerolactone, and caprolactone.

Preferably, the electrolyte according to the present invention may include ethylene carbonate and dimethyl carbonate as organic solvents.

Meanwhile, in addition to the electrolyte components, the electrolyte may additionally include other additives for the purpose of improving battery life characteristics, suppressing battery capacity reduction, and enhancing battery discharge capacity.

Typical examples of the additives include at least one selected from the group consisting of cyclic carbonate-based compounds, halogen-substituted carbonate-based compounds, sultone-based compounds, sulfate-based compounds, borate-based compounds, nitrile-based compounds, benzene-based compounds, amine-based compounds, silane-based compounds, and lithium salt-based compounds different from the lithium salt contained in the electrolyte.

Specifically, the other additives may include one or two or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, LiN(SO₂F)₂ (lithium bis(fluorosulfonyl)imide, LiFSI), LiN(SO₂CF₃)₂ (lithium bis(trifluoromethane sulfonyl)imide, LiTFSI), LiPO₂F₂, LiODFB, LiBOB (lithium bisoxalatoborate, LiB(C₂O₄)₂), and LiBF₄.

The other additives may be included in an amount of 0.01 to 20 wt% based on the total weight of the electrolyte, and preferably 0.05 to 5.0 wt%. If the content of the other additives is less than 0.01 wt%, the effect of improving the low-temperature output of the battery and the high-temperature storage characteristics and high-temperature life characteristics is insignificant, and if the content of the other additives exceeds 20 wt%, there is a possibility that excessive side reactions occur in the electrolyte during charging and discharging of the battery. In particular, when the additives for forming an SEI film are added in excessive amounts, the additives may not be sufficiently decomposed at high temperatures and may exist as unreacted substances or precipitated substances in the electrolyte at room temperature. Accordingly, side reactions that reduce the lifespan or resistance characteristics of the secondary battery may occur.

### (3) Separator

The separator physically separates the negative electrode and positive electrode and provides a path for lithium ions. Any separator typically used in lithium secondary batteries may be used without any particular limitations. In this case, the separator may be interposed between the positive electrode and negative electrode.

Specific examples include porous polymer films, for example, porous polymer films formed from polyolefin-based polymers such as ethylene homopolymer, propylene homopolymer, ethylene/butene copolymer, ethylene/hexene copolymer, and ethylene/methacrylate copolymer, or laminated structures including two or more layers thereof. The conventional porous nonwoven fabrics, for example, nonwoven fabrics made from high-melting-point glass fibers or polyethylene terephthalate fibers, may also be used. Furthermore, a coated separator containing a ceramic component or a polymer material for heat resistance or mechanical strength may be used, optionally in single-layer or multilayer structures.

Meanwhile, the lithium secondary battery may have a nominal voltage of 3.20 V or higher, preferably 3.38 V to 3.80 V, and more preferably 3.40 V to 3.75 V, and more preferably, 3.45 V to 3.70 V. The nominal voltage refers to an average voltage value during discharge of the lithium secondary battery.

The energy density (Wh/L) of a lithium secondary battery may be calculated as the product of the press density (g/cc), the discharge capacity (mAh/g), and the nominal voltage (V). Therefore, a higher nominal voltage may increase the energy density. However, according to the present invention, even if the nominal voltage is high, if the press density and discharge capacity are low, the energy density of the final lithium secondary battery may decrease. Therefore, if the nominal voltage satisfies the range, the energy density of the lithium secondary battery may be improved.

The lithium secondary battery according to the present invention may be usefully applied to portable devices such as mobile phones, laptop computers, and digital cameras, as well as electric vehicles such as hybrid electric vehicles (HEVs). The lithium secondary battery according to the present invention may achieve excellent output characteristics even at low temperatures, and may particularly be useful in the electric vehicle field.

According to another embodiment of the present invention, a battery module including the lithium secondary battery according to the present invention as a unit cell and a battery pack including the same are provided.

The battery module or battery pack may be used as a power source for one or more medium- to large-sized devices, such as power tools; electric vehicles, including electric vehicles (EVs), hybrid electric vehicles, and plug-in hybrid electric vehicles (PHEVs); or power storage systems.

Hereinafter, the present invention will be described in more detail through specific examples. However, the examples are intended to enable those skilled in the art to fully understand and easily implement the present invention, and the scope of the present invention is not limited to the examples.

### Example 1

### (1) Preparation of First Positive Electrode Active Material

Li₂CO₃, FeC₂O₄, and (NH₄)₂HPO₄ were mixed in an aqueous solution at a molar ratio of 0.5:1:1 and calcined at temperature conditions of 790°C to prepare LiFePO₄.

Then, the phosphate thus obtained was washed and dried, the dried material was mixed with glucose, and the mixture was heat-treated to prepare a phosphate with a carbon coating layer formed thereon.

Then, the phosphate with a carbon coating layer formed thereon was pulverized and classified to prepare a first positive electrode active material.

### (2) Preparation of Second Positive Electrode Active Material

Li₂CO₃, MnCO₃, FeC₂O₄, and (NH₄)₂HPO₄ were mixed in an aqueous solution at a molar ratio of 0.5:0.6:0.4:1 and calcined at temperature conditions of 650°C to prepare LiMn_{0.6}Fe_{0.4}PO₄.

Then, the phosphate thus obtained was washed and dried, the dried material was mixed with glucose, and the mixture was heat-treated to prepare a phosphate with a carbon coating layer formed thereon.

Then, the phosphate with the carbon coating layer formed thereon was pulverized and classified to prepare a second positive electrode active material.

### (3) Preparation of Positive Electrode Material Powder

The first and second positive electrode active materials were mixed at a weight ratio of 80:20 to prepare a positive electrode material powder.

### Example 2

A positive electrode material powder was prepared in the same manner as in Example 1, except that the first and second positive electrode active materials prepared in Example 1 were mixed at a weight ratio of 70:30.

### Comparative Example 1

A positive electrode material powder was prepared in the same manner as in Example 1, except that the first and second positive electrode active materials prepared in Example 1 were mixed at a weight ratio of 50:50.

### Comparative Example 2

Li₂CO₃, FeC₂O₄, and (NH₄)₂HPO₄ were mixed in an aqueous solution at a molar ratio of 0.5:1:1 and then calcined at temperature conditions of 790°C to prepare LiFePO₄.

Then, the phosphate thus obtained was washed and dried, the dried material was mixed with glucose, and the mixture was heat-treated to prepare a phosphate with a carbon coating layer formed thereon.

Then, the phosphate with a carbon coating layer formed thereon, i.e., a positive electrode active material, was pulverized and classified to prepare a positive electrode material powder.

### Comparative Example 3

Li₂CO₃, MnCO₃, FeC₂O₄, and (NH₄)₂HPO₄ were mixed in an aqueous solution at a molar ratio of 0.5:0.3:0.7:1 and then calcined at temperature conditions of 650°C to prepare a phosphate having a composition of LiMn_{0.3}Fe_{0.7}PO₄.

Then, the phosphate thus obtained was washed and dried, the dried material was mixed with glucose, and the mixture was heat-treated to prepare a phosphate with a carbon coated layer formed thereon.

Then, the phosphate having a carbon coating layer, i.e., a positive electrode active material, was then pulverized and classified to prepare a positive electrode material powder.

### Comparative Example 4

A second positive electrode active material of Comparative Example 4 was prepared in the same manner as the second positive electrode active material prepared in Example 1, except that the calcination was performed at temperature conditions of 750°C.

Then, the first positive electrode active material prepared in Example 1 and the second positive electrode active material prepared in Comparative Example 4 were mixed at a weight ratio of 80:20 to prepare a positive electrode material powder.

The average particle diameters D₅₀ of the prepared positive electrode material powders were measured, and the results are summarized in Table 1.

**[Table 1]**

| | Positive electrode material powder | | | | | | |
|---|---|---|---|---|---|---|---|
| | First positive electrode active material | | | Second positive electrode active material | | | Molar ratio of Fe to Mn (Fe/M n) in posit ive elect rode mater ial powde r |
| | First phospha te composi tion | Aver age part icle diam eter D₅₀ (µm) | Weig ht rati o | Second phospha te composi tion | Aver age part icle diam eter D₅₀ (µm) | Weig ht rati o | |
| Example 1 | LiFePO₄ | 0.95 | 80 | LiMn_{0.6}F e_{0.4}PO₄ | 0.43 | 20 | 7.33 |
| Example 2 | LiFePO₄ | 0.95 | 70 | LiMn_{0.6}F e_{0.4}PO₄ | 0.43 | 30 | 4.56 |
| Comparative Example 1 | LiFePO₄ | 0.95 | 50 | LiMn_{0.6}F e_{0.4}PO₄ | 0.43 | 50 | 2.33 |
| Comparative Example 2 | LiFePO₄ | 0.95 | 100 | - | | | - |
| Comparative Example 3 | - | | | LiMn_{0.3}F e_{0.7}PO₄ | 0.47 | 100 | 2.33 |
| Comparative Example 4 | LiFePO₄ | 0.95 | 80 | LiMn_{0.6}F e_{0.4}PO₄ | 1.03 | 20 | 7.33 |

### Experimental Example 1: Energy Density Measurement

### 1) Press Density Measurement

1 g of each sample of the positive electrode material powders prepared in Examples 1-2 and Comparative Examples 1-4 was taken and placed in a cylindrical metal mold with a diameter of 1.3 cm and pressed under a load of 3 tons. Then, the height of the pressed mold was measured using a vernier caliper to determine the press density.

The measurement results are shown in Table 2.

### 2) Discharge Capacity and Nominal Voltage Measurement

### 2-1) Fabrication of Lithium Secondary Battery Half-Cell

Each of the positive electrode material powders prepared in Examples 1-2 and Comparative Examples 1-4, a positive electrode conductive agent (Super P), and a positive electrode binder (PVdF) were mixed at a weight ratio of 95:2:3 in N-methyl pyrrolidone to prepare a positive electrode slurry. The positive electrode slurry was applied to an aluminum current collector, dried, and rolled to produce a positive electrode.

Lithium metal was used as a negative electrode.

An electrode assembly was manufactured by interposing a porous polyethylene separator between the positive electrode manufactured as described above and the negative electrode. The electrode assembly was then placed inside a case, and an electrolyte was injected into the case to fabricate a lithium secondary battery. In this case, the electrolyte was prepared by dissolving 1.2 M lithium hexafluorophosphate (LiPF₆) in a mixed organic solvent containing ethylene carbonate and dimethyl carbonate in a weight ratio of 3:7.

### 2-1) Discharge Capacity Measurement

The lithium secondary batteries thus manufactured were activated, charged to 4.2 V at a constant current of 0.1 C at 25°C, and then discharged to 2.5 V at a constant current of 0.1 C. The 0.1 C discharge capacity was measured.

The measurement results are shown in Table 2 below.

### 2-2) Nominal Voltage Measurement

The lithium secondary batteries thus manufactured were activated, charged at a constant current of 0.1 C at 25°C to 4.2 V, and then discharged at a constant current of 0.1 C until the voltage reached 2.5 V.

The average voltage (nominal voltage) at this time was measured and is shown in Table 2.

### 3) Energy Density Measurement

The energy density (Wh/L) was calculated by multiplying the press density (g/cc) measured in 1) above by the discharge capacity (mAh/g) and nominal voltage (V) measured in 2).

The measurement results are shown in Table 2.

**[Table 2]**

| | Press density (g/cc) | Dischar ge capacit y (mAh/g) | Nominal voltage (V) | Energy density (Wh/L) |
|---|---|---|---|---|
| Example 1 | 2.54 | 156 | 3.45 | 1367 |
| Example 2 | 2.56 | 153 | 3.49 | 1367 |
| Comparative Example 1 | 2.49 | 149 | 3.54 | 1312 |
| Comparative Example 2 | 2.46 | 158 | 3.37 | 1310 |
| Comparative Example 3 | 2.15 | 157 | 3.58 | 1208 |
| Comparative Example 4 | 2.47 | 154 | 3.45 | 1312 |

Through Table 2 above, it can be found that the positive electrode material powders of Examples 1-2, which satisfy the composition and weight ratio of the first and second positive electrode active materials according to the present invention, and average particle diameter D₅₀ range of the second positive electrode active material, have better energy density than the positive electrode material powders of Comparative Examples 1-4, which do not satisfy the conditions.

## Claims

1. A positive electrode material powder comprising: a first positive electrode active material comprising a first phosphate: and a second positive electrode active material comprising a second phosphate, wherein
the first phosphate is represented by the following Formula 1,
the second phosphate is represented by the following Formula 2,
the first positive electrode active material is contained in a greater amount than the second positive electrode active material, and
the second positive electrode active material has an average particle diameter D₅₀ of 1.0 µm or less:
[Formula 1] Li₁₊ₓ₁[Mn_{1-a1-b1}Feₐ₁M¹_{b1}]PO₄
in Formula 1,
M¹ comprises one or more selected from the group consisting of Al, Mg, Ni, Co, Ti, Ga, Cu, V, Nb, Zr, Ce, In, Zn and Y,
-0.1≤x1≤0.1, 0.9≤a1≤1.0, and 0.0≤b1≤0.1,
[Formula 2] Li₁₊ₓ₂[Mn_{1-a2-b2}Feₐ₂M²_{b2}]PO₄
in Formula 2,
M² comprises one or more selected from the group consisting of Al, Mg, Ni, Co, Ti, Ga, Cu, V, Nb, Zr, Ce, In, Zn and Y,
-0.1≤x2≤0.1, 0.35≤a2≤0.45, and 0.0≤b2≤0.1.

2. The positive electrode material powder according to claim 1, wherein the first phosphate is LiFePO₄.

3. The positive electrode material powder according to claim 1, wherein the second phosphate is represented by the following Formula 2-1:
[Formula 2-1] Li₁₊ₓ₂[Mn_{1-a2-b2}Feₐ₂M²_{b2}]PO₄
in Formula 2,
M² comprises one or more selected from the group consisting of Al, Mg, Ni, Co, Ti, Ga, Cu, V, Nb, Zr, Ce, In, Zn and Y,
-0.1≤x2≤0.1, 0.35≤a2≤0.45, and 0.0≤b2≤0.1.

4. The positive electrode material powder according to claim 1, wherein an average particle diameter D₅₀ of the first positive electrode active material is 0.5 µm to 10 µm.

5. The positive electrode material powder according to claim 1, wherein the average particle diameter D₅₀ of the second positive electrode active material is 0.3 µm to 0.8 µm.

6. The positive electrode material powder according to claim 1, wherein the first and second positive electrode active materials independently and respectively further comprise a coating layer comprising carbon disposed on the first and second phosphates.

7. The positive electrode material powder according to claim 5, wherein the content of carbon comprised in the coating layer comprising carbon disposed on the first phosphate is 0.1 wt% to 5.0 wt% based on the total weight of the first positive electrode active material.

8. The positive electrode material powder according to claim 5, wherein the content of carbon comprised in the coating layer comprising carbon disposed on the second phosphate is 0.5 wt% to 5.0 wt% based on the total weight of the second positive electrode active material.

9. The positive electrode material powder according to claim 1, wherein a weight ratio of the first positive electrode active material and the second positive electrode active material is 60:40 to 90:10.

10. The positive electrode material powder according to claim 1, wherein the average particle diameter D₅₀ of the first positive electrode active material is greater than the average particle diameter D₅₀ of the second positive electrode active material.

11. The positive electrode material powder according to claim 1, wherein the molar ratio of Fe to Mn (Fe/Mn) in the positive electrode material powder is 2.5 to 50.

12. The positive electrode material powder according to claim 1, wherein the positive electrode material powder has a press density of 2.50 g/cc or more, as measured after pressing at a pressure of 3 tons.

13. A positive electrode comprising the positive electrode material powder of claim 1.

14. A lithium secondary battery comprising: the positive electrode of claim 13; a negative electrode oppositely disposed to the positive electrode; and an electrolyte.
